# EUROPÄISCHE PATENTSCHRIFT

(11) **EP 2 393 657 B1**
(45) Veröffentlichungstag und Bekanntmachung des Hinweises auf die Patenterteilung: **14.05.2014**
(21) Anmeldenummer: 10702055.4
(22) Anmeldetag: 27.01.2010
(51) Int. Cl.: B32B 27/36, B32B 27/18, C08K 5/06, C08K 5/103, C08K 5/101, B32B 27/08, B42D 25/00

(54) **FOLIENMEHRSCHICHTVERBUND MIT EINER SCHICHT AUS POLYCARBONAT**
MULTI-LAYER FILM COMPOSITE HAVING A POLYCARBONATE LAYER
COMPOSITE EN FEUILLE MULTICOUCHES, COMPORTANT UNE COUCHE EN POLYCARBONATE

(30) Priorität: 06.02.2009 DE 102009007762
(43) Veröffentlichungstag der Anmeldung: 14.12.2011
(73) Patentinhaber: Bayer Intellectual Property GmbH, 40789 Monheim (DE)
(72) Erfinder: HEUER, Helmut-Werner, 51371 Leverkusen (DE); WEHRMANN, Rolf, 47800 Krefeld (DE)
(74) Vertreter: BIP Patents
(86) Internationale Anmeldenummer: PCT/EP2010/000462
(87) Internationale Veröffentlichungsnummer: WO 2010/089042

(56) Entgegenhaltungen:
- WO-A1-00/15707
- DE-A1- 4 023 933
- DE-A1-102007 004 332
- DATABASE WPI Week 200503 Thomson Scientific, London, GB; AN 2005-023036 XP002570395 -& JP 2004 330541 A (TEIJIN KASEI LTD) 25. November 2004 (2004-11-25)

## Beschreibung

Gegenstand der Erfindung ist ein Folienmehrschichtverbund, der mindestens eine Schicht aus Polycarbonat oder Copolycarbonat aufweist, dadurch gekennzeichnet, dass das Polycarbonat oder Copolycarbonat zusätzlich ein oder mehrere spezielle Additive enthält.

Extrusionsfolien aus Polycarbonat, Polyestercarbonat oder auch Blends aus PC und Polyestern wie Polyethylenterephthalate, Polybutylenterephthalate oder Polycyclohexandimethanol-cyclohexandi-carboxylat (PCCD) wie z.B. mit den Handelsnamen Lexan SLX® oder XYLEX® (beide Sabic Innovative Plastic) werden vor allem im Elektronikbereich, für dekorative und funktionelle Blenden im Haushaltsgerätebereich, als Deckfolien z.B. für Sportartikel, für ID-Karten und Blisterverpackungen eingesetzt. Weitere Anwendungsgebiete liegen im Bereich des Automobilbaus, wie z.B. Karosserieteile oder Außenspiegel, oder im Bereich der Telekommunikation, wie z.B. Handyschalen und Handytastaturen. Die Folien zeichnen sich durch hohe Transparenz, Schlagzähigkeit und Wärmeformbeständigkeit aus.

Ein besonderer Bereich, in dem Substratmaterialien zur Herstellung von Folien Verwendung finden, sind tragbare Datenträger. Tragbare Datenträger werden in den unterschiedlichsten Ausführungsformen für eine Vielzahl von Anwendungen eingesetzt. Dabei weisen die tragbaren Datenträger häufig eine Beschriftung, eingearbeitete Sicherheitsmerkmale, einen Magnetstreifen und/oder einen integrierten Schaltkreis auf. Insbesondere können die tragbaren Datenträger als Kunststoffkarten mit genormten Abmessungen ausgebildet sein und beispielsweise zur Durchführung von Transaktionen des bargeldlosen Zahlungsverkehrs oder zum Nachweis einer Zugangsberechtigung zu einem Mobilfunknetz usw. eingesetzt werden. Ebenso sind auch tragbare Datenträger bekannt, die in der Regel jeweils dünner und großformatiger als die genormten Kunststoffkarten ausgebildet sind und als eine Seite in ein Passbuch integriert sind.

Angesichts der weiten Verbreitung von tragbaren Datenträgern spielt neben den Herstellungskosten auch die Umweltverträglichkeit der eingesetzten Materialien eine zunehmend größere Rolle. Dabei muss in den meisten Anwendungsfällen weiterhin eine lange Lebensdauer der tragbaren Datenträger gewährleistet sein. Außerdem werden die tragbaren Datenträger in zunehmendem Maße mit Beschriftungen und Zusatzelementen versehen, wobei gleichzeitig die daran geknüpften Qualitätsanforderungen steigen.

Ein bekanntes Verfahren zur Herstellung von tragbaren Datenträgern hoher Qualität stellt die Lamination aus mehreren Kunststofffolien dar. Allerdings ist die Herstellung komplex aufgebauter tragbarer Datenträger aus vielen Einzelfolien aufwendig und bezüglich der Materialauswahl insbesondere benachbarter Einzelfolien stark eingeschränkt. Zudem müssen die Einzelfolien eine gewisse Mindestdicke aufweisen, um eine Handhabung zu ermöglichen. Es wurde daher bereits dazu übergegangen, für die Herstellung von tragbaren Datenträgern coextrudierte Folien zu verwenden, die aus mehreren Schichten bestehen. Die einzelnen Schichten werden während ihrer Herstellung zu einer mehrschichtigen Folie verbunden. Mehrere dieser mehrschichtigen Folien können dann durch Lamination miteinander verbunden werden.

Eine derartige Vorgehensweise ist beispielsweise aus der EP-A 0 640 940 bekannt. Dort ist eine kontaktlose Chipkarte offenbart, die eine zwischen zwei Deckfolien angeordnete Kernfolie aufweist. Die Deckfolien sind jeweils mittels einer Verbindungsschicht mit der Kernfolie verbunden. Die Verbindungsschicht ist jeweils insbesondere als eine mit den Deckfolien und/oder mit der Kernfolie coextrudierte Schicht ausgebildet. Die Deckfolien und die Kernfolie bestehen beispielsweise aus Polycarbonat. Die Verbindungsschichten können aus einem als PETG bezeichneten modifizierten Polyester bestehen.

Aus der US-A 5,928,788 ist unter anderem ein mehrlagiger Datenträger bekannt, der durch Lamination einer Kernfolie und zweier Deckfolien hergestellt wird. Die Kernfolie und die Deckfolien bestehen insbesondere aus PETG. Um ein allzu starkes Anhaften an den Platten der Laminierpresse zu verhindern, werden die Deckfolien im Außenbereich mit "Antiblock"-Substanzen angereichert. Hierzu werden die Deckfolien jeweils aus zwei Schichten coextrudiert, wobei nur eine dieser Schichten die Antiblock-Substanzen enthält.

Die WO 02/41245 A2 offenbart einen multifunktionellen Kartenkörper, der aus mehreren durch Lamination miteinander verbundenen Folien gebildet ist, wobei wenigstens eine Folie aus wenigstens zwei Coextrusionsschichten besteht. Insbesondere ist vorgesehen, eine Kernfolie beidseits mit je einer Deckfolie zu verbinden. Die Deckfolien können jeweils als eine coextrudierte Polycarbonatfolie mit zwei oder drei Coextrusionsschichten ausgebildet sein. Die Kernfolie kann zwei unterschiedliche Arten von Coextrusionsschichten aufweisen. Die beiden Arten von Coextrusionsschichten folgen alternierend aufeinander, wobei ein Schichtaufbau aus drei oder fünf alternierenden Coextrusionsschichten ausgebildet wird. Die eine Art von Coextrusionsschicht kann aus Polycarbonat oder Polyethylenterephtalat (PET) bestehen. Die andere Art von Coextrusionsschicht kann aus einem thermoplastischen Elastomer bestehen.

EP-A 0 706 152 offenbart laminierte Chipkarten oder Smart-Karten, welche aus thermoplastischen Materialien zusammengesetzt sind. Dieser aus laminierbaren Folien hergestellte Verbund weist deutliche Vorteile gegenüber Karten auf, die durch ein aufwendiges Klebeverfahren z.B. mittels Cyan-Acrylatklebern hergestellt wurden.

Polycarbonat ist aufgrund seiner guten mechanischen Eigenschaften für die oben beschriebenen Folien in besonderer Weise geeignet.

Polycarbonate mit Additiven aus der Klasse der Entformungsmittel sind z. B. in WO 99/05205 A oder US-A 6,008,280 beschrieben. Diese Polycarbonate werden beispielsweise als Substratmaterialien für optische Datenträger eingesetzt, da diese bessere Verarbeitungseigenschaften im Spritzgussprozess aufweisen. Kartenanwendungen wie oben beschrieben oder Laminierungseigenschaften so modifizierter Polycarbonate werden dagegen nicht beschrieben.

In der DE 10 2007 004 332 A1 werden Mehrschichtverbundwerkstoffe enthaltend mindestens eine Schicht Polycarbonat, optional enthaltend Entformungsmittel, beispielsweise Petaerythrittetrastearat und Glycerinmonostearat, vorzugsweise in einer Menge von 0,02 - 1 Gew.-%, offenbart. Die beiden genannten Verbindungen fallen in die Gruppe der erfindungsgemäßen Additive 1-8. Üblicherweise werden Entformungsmittel, wie der Name andeutet, als Trennmittel eingesetzt. Als solche haben diese Mittel bekanntermaßen eher haftverhindernde Eigenschaften. Aus dem genannten Dokument lässt sich also nicht der Schluss ziehen, dass die genannten Entformungsmittel in höheren Konzentrationen haftverbessernde Eigenschaften zeigen.

Die Herstellung des fertigen Kartenkörpers oder Mehrschichtverbundwerkstoffes erfolgt insbesondere durch eine Laminierpresse, in der das Folienbündel unter Einwirkung von Druck innig verbunden wird. Hierbei ist es von Vorteil, wenn zumindest eine der Kernfolien oder der Deckfolien eine sehr gute Haftungsneigung während des Laminierprozesses aufweist. Dadurch lässt sich der Prozess der Herstellung dieser Folienverbünde beschleunigen. Ferner ist die Haftung der Deckfolien auf der Kernfolie verbessert. Diese Kernfolie kann transparent und/oder eingefärbt sein, und gute mechanische Eigenschaften aufweisen. Ferner können die Deckfolien laserbedruckbar sein. Deshalb wird hier bevorzugt Polycarbonat eingesetzt.

Folien aus Polycarbonat haben jedoch den Nachteil einer hohen Verarbeitungstemperatur im Laminierprozess. Ferner benötigt man einen längeren Zeitraum um die Folien zu laminieren. Dadurch sind die oben beschriebenen Laminationszyklen verlängert und man benötigt lange Herstellzeiten. Auch kann es während der Gebrauchsphase des fertigen Folienlaminats aufgrund unzureichender Haftung zwischen den Folien zu Delaminierung kommen.

Daher bestand die Aufgabe, eine Folie zur Herstellung eines Mehrschichtsystems zur Verfügung zu stellen, die den Anforderungen von guten mechanischen Eigenschaften genügt und im Vergleich zum Stand der Technik eine verbesserte Laminierbarkeit, verbesserte Haftung bei der Laminierung und Verarbeitbarkeit aufweist. Gleichzeitig soll diese verbesserte Folie möglichen Anforderungen an Transparenz, Einfärbbarkeit und Laserbedruckbarkeit genügen.

Die Aufgabe konnte überraschenderweise durch die Bereitstellung eines Mehrschichtverbundwerkstoffs gelöst werden, der dadurch gekennzeichnet ist, dass er mindestens eine Folie/Schicht enthaltend Polycarbonat oder Copolycarbonat aufweist und dass das Polycarbonat oder Copolycarbonat zusätzlich ein oder mehrere Additive ausgewählt aus Gruppe der Verbindungen der allgemeinen Formeln (1) bis (8) enthält: 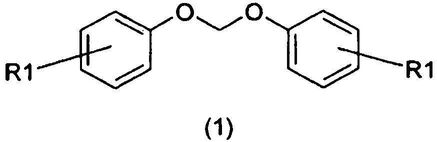 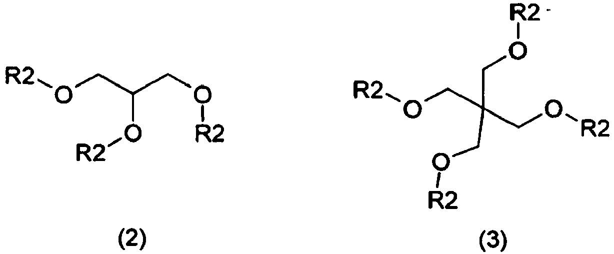 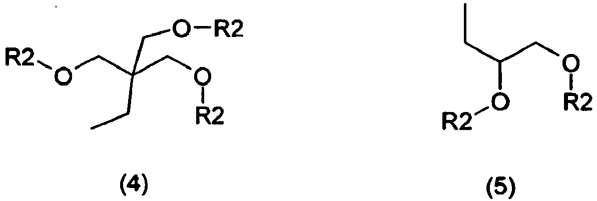 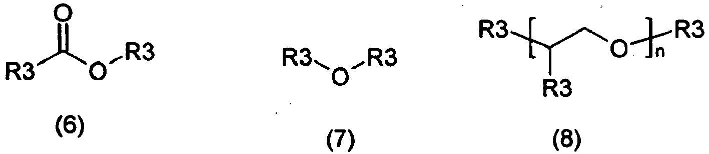 worin
- R1 unabhängig voneinander ausgewählt sind aus der Gruppe bestehend aus C10-C25-Alkyl-, C10-C25-Alkoxy-, und C10-C25-Alkyl-substituiertes Aryl, wobei der Ausdruck "C10-C25-Alkyl" für einen linearen oder verzweigten Kohlenwasserstoffrest steht, der 10 bis 25 Kohlenstoffatome aufweist, insbesondere für lineares C12-C20-Alkyl und ganz besonders für Pentadecyl und wobei der Ausdruck "C10-C25-Alkyl-substituiertes Aryl" für einen Phenyl- oder Naphtylrest steht, der mit C10-C25-Alkylresten substituiert ist,
- R2 unabhängig voneinander ausgewählt sind aus der Gruppe von C10-C25-Alkyl-carbonyl oder Wasserstoff, und
- R3 unabhängig voneinander ausgewählt sind aus der Gruppe von C10-25-Alkyl,
wobei der Ausdruck "C10-C25-Alkyl" in R2 und R3 für einen linearen oder verzweigten Kohlenwasserstoffrest steht, der 10 bis 25 Kohlenstoffatome aufweist, insbesondere für lineares C12-C20-Alkyl und ganz besonders für C12-C18-Alkyl.

Bevorzugt sind z.B. Pentaerythrittetrastearat, Glycerinmonostearat, und Stearylstearat. Die Additive werden allein oder im Gemisch in einer Menge von 2,1 - 6 Gew.-%, bezogen auf die Masse der Zusammensetzung eingesetzt.

Überraschenderweise wurde gefunden, dass ein solcher Mehrschichtverbundwerkstoff die oben geforderten Eigenschaften aufweist.

Der Ausdruck "Folienmehrschichtverbund" steht hierbei für einen Werkstoff aus 2, 3, 4, 5 oder mehr Schichten, die untereinander verbunden sind, z.B. durch Coextrusion oder Laminierung. Die Schichten können hierbei aus gleichen oder verschiedenen Materialien bestehen. Auch wenn Schichten überwiegend aus dem gleichen Werkstoff bestehen, so sind diese im Sinne der vorliegenden Erfindung dennoch unterschiedliche Schichten, wenn sie in z.B. in getrennten Arbeitsschritten aufgebracht werden oder unterschiedliche Zusätze enthalten.

Der Ausdruck "mindestens eine Schicht" bedeutet, dass der Folienmehrschichtverbund eine oder mehrere solcher Schichten aufweisen kann.

Geeignete Polycarbonate für die Herstellung der erfindungsgemäßen Kunststoffzusammensetzung sind alle bekannten Polycarbonate. Dies sind Homopolycarbonate und thermoplastische Polyestercarbonate sowie Copolycarbonate, in denen eine beliebige Mischung von Bisphenolaten eingesetzt werden kann. Sie haben bevorzugt mittlere Molekulargewichte Mw von 18.000 bis 40.000 g/mol, vorzugsweise von 26.000 bis 36.000 g/mol und insbesondere von 28.000 bis 35.000 g/mol, ermittelt durch Gelpermeationschromatographie (GPC) unter Verwendung von Polycarbonat als Eichsubstanz.

Für die Herstellung der zu verwendenden Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), , Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethyleyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, (Bisphenol A, BPA) 2,2-Bis-(3-methyl-4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z.B. in den US-A -PS 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle der Copolycarbonate werden mehrere Diphenole eingesetzt, wobei selbstverständlich die verwendeten Bisphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Zur Regelung des Molekulargewichtes können monofunktionelle Phenole wie Phenol, p-tert.Butylphenol, iso-Octylphenol, Cumylphenol, deren Chlorkohlensäureester oder Säurechloride von Monocarbonsäuren bzw. Gemischen aus diesen eingesetzt werden.

Die Menge an Kettenabbrechern beträgt jeweils 0,1 bis 10 Mol-%, bezogen im Falle der phenolischen Kettenabbrecher auf Mole Diphenole.

Zur Herstellung der zu verwendenden Polycarbonate können auch trifunktionelle Verbindungen während der Synthese als Verzweiger zugesetzt werden. Üblicherweise werden Trisphenole, Quarterphenole oder Säurechloride von Tri- oder Tetracarbonsäuren verwendet, oder auch Gemische der Polyphenole oder der Säurechloride.

Einige der verwendbaren Verbindungen mit drei oder mehr als drei phenolischen Hydroxylgruppen sind beispielsweise:
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl]-propan,
2,4-Bis-(4-hydroxyphenyl-isopropyl)-phenol,
Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol (IBK) und 1,1,1-Tri-(4-hydroxyphenyl)-ethan (THPE).

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als den bevorzugt bzw. besonders bevorzugt genannten Diphenolen.

Die beschriebenen Polycarbonate können mit verschiedenen Additiven versetzt sein.

Der Zusatz von Additiven dient der Verlängerung der Nutzungsdauer oder der Farbe (Stabilisatoren), der Vereinfachung der Verarbeitung (z.B. weitere Entformer als oben benannt, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem so genannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:
Alkylierte Monophenole, Alylthiomethylphenole, Hydrochinone, alkylierte Hydrochinone, Tocopherole, hydroxylierte Thiodiphenylether, Alkylidenbisphenole, O-,N- und S-Benzylverbindungen, hydroxybenzylierte Malonate, aromatische Hydroxyverbindungen, Triazinverbindungen, Acylaminophenole, Ester von β-(3,5-Di-tert-butyl-4-hydroxyphenyl)-propionsäure, Ester von β-(5-tert-Butyl-4-hydroxy-3-methylphenyl)-propionsäure, Ester von β-(3,5-Dicyclohexyl-4-hydroxyphenyl)-propionsäure, Ester von 3,5-Di-tert-butyl-4-hydroxyphenyl-essigsäure, Amide der β-(3,5-Di-tert-butyl-4-hydroxyphenyl) propionsäure, geeignete Thiosynergisten, sekundäre Antioxidantien, Phosphite und Phosphonite, Benzofuranone und Indolinone.

Bevorzugt sind organische Phosphite, Phosphonate und Phosphane, meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m-Phosphorsäuren, ganz oder teilweise veresterte Phosphate oder Phosphite geeignet.

Als Lichtschutzmittel (UV-Absorber) sind geeignet: 2-(2'-Hydroxyphenyl)benzotriazole, 2-Hydroxybenzophenone, Ester von substituierten und unsubstituierten Benzoesäuren, Acrylate, sterisch gehinderte Amine, Oxamide, 2.8. 2-(2-Hydroxyphenyl)-1,3,5-triazine. Bevorzugt sind substituierte Benztriazole.

Polypropylenglykole allein oder in Kombination mit z.B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmenge, IR-Absorber, einzeln, im Gemisch oder auch in Kombination mit Stabilisatoren, Glasfasern, Glas(hohl)kugeln, anorganischen Füllstoffen zugesetzt werden. Es kann auch Ruß als Additiv verwendet werden.

Unterschiedliche schichtspezifische Funktionen der Folien selbst können durch unterschiedliche Arten von Additiven erreicht werden.

Als äußere Deckschicht kann die erfindungsgemäße Polycarbonatschicht ein lasersensitives Additiv enthalten. Als Additiv ist Ruß oder ein Infrarot-Licht-absorbierender Farbstoff geeignet.

Bei Nutzung der Standardlaser, speziell der weit verbreiteten Nd-VAG-Festkörperlaser mit einer Wellenlänge von 1,06 µm, findet im Auftreffpunkt des Lasers auf die Materialoberfläche eine Farbänderung oder ein Farbumschlag statt und es werden scharfe, kontrastreiche Beschriftungen und Kennzeichnungen erhalten.

Geeignete Additive sind insbesondere Farbpigmente und Metallsalze, Kupferhydroxidphosphat Iriodin, ein Perglanzpigment, wie es von der Firma Merck im Handel erhältlich ist und vor allem Ruß. Diese Additive werden dem erfindungsgemäßen Polycarbonat insbesondere in der Größenordnung von einigen Promille bis maximal 10 Prozent zugemischt.

Des Weiteren kann die erfindungsgemäße Polycarbonatschicht auch weitere anorganische Füllstoffe enthalten. Geeignete anorganische Füllstoffe zur Erzielung einer opaken bzw. transluzenten Polycarbonatschicht sind z.B. konventionelle anorganische Pigmente, insbesondere Metalle oder Metalloxide wie Aluminiumoxide, Kieselsäure, Titanite, sowie alkalische Metallsalze wie Carbonate oder Sulfate von Calcium oder Barium. Geeignete partikuläre Füllstoffe können homogen sein und bestehen vorwiegend aus einem Material, wie Titandioxid oder Bariumsulfat allein. Alternativ kann zumindest ein Anteil des Füllstoffes heterogen sein. So kann der eigentliche Füllstoff noch mit einem Modifikator versetzt sein. Z.B. kann der eigentliche Füllstoff noch mit einem Oberflächenmodifikator versehen sein, wie z.B. einem Pigment, einem Verarbeitungshilfsmittel, einem Tensid oder einem anderen Modifizierungsmittel, um die Kompatibilität mit dem Polycarbonat zu verbessern bzw. zu verändern. In einer besonderen Ausführungsform enthält die Polycarbonatschicht Titandioxid.

Die Menge an diesen anorganischen Füllstoffen im Polycarbonat beträgt bevorzugt 2 - 50, besonders bevorzugt 3 - 30 Gew-%.

Die Herstellung der für die Folien bzw. Coextrusionsfolien zu verwendenden Polycarbonate erfolgt u. A. nach dem Phasengrenzflächenverfahren. Dieses Verfahren zur Polycarbonatsynthese ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P.R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen. Gemäß diesem Verfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert. Die organische Phase wird schließlich abgetrennt und das Polycarbonat durch verschiedene Aufarbeitungsschritte daraus isoliert.

Für die Herstellung des zu verwendenden Polycarbonats ist das kontinuierliche Herstellverfahren für Polycarbonat nach dem Phasengrenzflächenverfahren sowie das Schmelzekondensationsverfahren geeignet.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die erfindungsgemäßen Zusammensetzungen erfolgt bevorzugt in bekannter Weise durch Vermischen von Polymergranulat mit den Zusätzen bei Temperaturen von etwa 200 bis 330°C in üblichen Aggregaten wie Innenknetern, Einschneckenextrudern und Doppelwellenextrudern beispielsweise durch Schmelzecompoundierung oder Schmelzeextrusion oder durch Vermischen der Lösungen des Polymers mit Lösungen der Additive und anschließende Verdampfung der Lösungsmittel in bekannter Weise. Die Herstellung der Folien erfolgt vorzugsweise durch Extrusion oder Coextrusion.

Zur Herstellung von Folien durch Extrusion wird das Polycarbonatgranulat dem Fülltrichter eines Extruders zugeführt und gelangt über diesen in das Plastifiziersystem, bestehend aus Schnecke und Zylinder. Im Plastifiziersystem erfolgt das Fördern und Aufschmelzen des Materials. Die Kunststoffschmelze wird durch eine Breitschlitzdüse gedrückt. Zwischen Plastifiziersystem und Breitschlitzdüse können eine Filtereinrichtung, eine Schmelzpumpe, stationäre Mischelemente und weitere Bauteile angeordnet sein. Die die Düse verlassende Schmelze gelangt ggf. auf einen Glättkalander. Im Walzenspalt des Glättkalanders erfolgt die endgültige Formgebung. Die Formfixierung erfolgt letztendlich durch Abkühlung- dies kann z.B. wechselseitig auf den Glättwalzen und an der Umgebungsluft geschehen. Die weiteren Einrichtungen dienen dem Transport, dem Aufbringen von Schutzfolie, dem Aufwickeln der extrudierten Folien.

Im Fall einer Coextrusion wird in einem oder mehreren weiteren Extrudern das zu coextrudierende Material in gleicher Weise plastifiziert. Die Coexschmelze(n) wird (werden) in einem speziellen Coexadapter vor der Düse oder in einer speziellen Coexdüse mit dem Hauptmaterial zusammengeführt. Die Coexschicht kann sowohl einseitig wie auch auf beiden Seiten der Basisschicht aufgebracht werden. Eine nachträgliche Bearbeitung der Folien kann durch Thermoformen oder Warmverformen oder Oberflächenbehandlungen wie die Ausrüstung mit Kratzfestbeschichtungen, wasserspreitenden Schichten und anderen Funktionsschichten erfolgen.Die Folien können einseitig oder beidseitig glatt oder einseitig oder beidseitig mattiert oder strukturiert sein.

Die Dicke der Folien beträgt 1 - 2000 µm, bevorzugt 5 - 1000 µm, ganz besonders bevorzugt 10-850 µm.

Die erfindungsgemäßen Folien eignen sich insbesondere zur Herstellung der oben beschriebenen Karten, wie z.B. Smart-ID-Karten, Chipkarten allgemein, EC-Karten, Kreditkarten, Versichertenkarten, Pässe, RFID-Tags, Führerscheine etc. Diese Datenträger bestehen aus unterschiedlich aufgebauten Kern- und Deckfolien. Hierbei kommen auch Coextrusionsfolien zum Einsatz. Die erfindungsgemäßen Folien bzw. Coextrusionsfolien können in beliebiger Weise mit anderen Folien wie z.B. herkömmlichen Polycarbonatfolien, Folien aus Polyestern, Co-Polyestern und/oder kristallinen, teilkristallinen oder mikrokristallinen Polyestern aufgebaut sein. Desweiteren können Folien aus PVC, ABS, PETG oder PET bzw. deren Mischformen wie PC/ABS zusätzlich eingesetzt werden. Gegenstand der Erfindung sind also auch Verbundsysteme aus diesen Werkstoffen sowie dem modifizierten Polycarbonat. Die Anordnung der Folien kann je nach Anwendung in verschiedener Weise gewählt werden. Die Einzelfolien oder Coextrusionsfolien können dabei unterschiedliche Dicken aufweisen. Der Datenträger oder die Karte kann symmetrisch oder asymmetrisch aufgebaut sein. Der Datenträger kann beispielsweise als eine Seite eines Passbuches ausgebildet sein.

Ebenso ist es auch möglich, den Datenträger als eine Kunststoffkarte, insbesondere als eine Magnetstreifenkarte oder eine Chipkarte, auszubilden.

Um die erforderlichen Eigenschaften des Datenträgers zu erhalten, kann die erfindungsgemäße Folie metallisiert, strukturiert oder bedruckt werden - z.B. mit Leiterbahnen. Das Strukturieren und Bedrucken kann im Siebdruckverfahren erfolgen.

Die Erfindung wird durch die folgenden Beispiele weiter erläutert.

### Beispiele

### 1. Herstellung des Polycarbonatcompounds:

Es wurden Polycarbonat-Additiv-Mischungen aus Polycarbonat Makrolon M3108 (Bayer MaterialScience AG) und den in Tab. 1 genannten Additiven (Propylenglycoldistearat der Fa. Faci, Italien; Loxiol G32 und Glycerinmonostearat der Fa. Cognis Oleochemicals, Germany; dimeres Pentadecylphenolformal nach eigener Synthese analog EP 1664174-B1) in den dort angegebenen Konzentrationen hergestellt. Die Herstellung der additivierten Polycarbonatgranulate (Compounds 1-8) auf Basis Makrolon M3108 erfolgte durch Compoundierung auf einem Zweiwellenextruder ZE 25/5 der Fa. Berstorf bei einer Temperatur von 300 °C.

**Tab. 1: Hergestellte Polycarbonat-Additiv-Compounds**

| Compound/ System | Propylenglycoldistearat | Glycerinmonostearat | Loxiol G32 | dimeres Pentadecylphenolformal |
|---|---|---|---|---|
| | Gew.-% | Gew.-% | Gew.-% | Gew.-% |
| 1 | | | | 3,95 |
| 2 | 0 | 0 | 0 | 0 |
| 3 | | | 2,20 | |
| 4 | | | 2,90 | |
| 5 | | 2,50 | | |
| 6 | | 3,30 | | |
| 7 | 2,40 | | | |
| 8 | 3,10 | | | |

### 2. Herstellung der Folien:

Zur Untersuchung der Laminierungseigenschaften wurden Folien aus 20%-igen Lösungen der Compounds 1 - 8 in Methylenchlorid hergestellt.

Aus den Lösungen wurden Polycarbonat-Folien in einer Breite von 200 mm auf einer automatischen Folien- bzw. Filmziehbank Coatmaster 509 MC der Fa. Erichson unter Abdampfen des Lösungsmittels gezogen (bei 30°C und 5 mm/s Vorschub des Rakels). Die so erhaltenen Folien wiesen eine Dicke von etwa 50 µm auf und wurden für die Herstellung des Mehrschichtverbundes zurechtgeschnitten (50 x 50 mm).

### 3. Herstellung des Folienmehrschichtverbund:

Die aus den Compounds 1-8 erhaltenen Gießfolien wurden jeweils gegen eine Folie aus Makrolon M3108 (kommerziell erhältlich wie auch selbst hergestellt) in einer Heißpresse der Firma Pual Otto Weber, Modell PN200 unter einem Druck von 200 kN 5 Minuten lang bei unterschiedlichen Temperaturen (150, 140, 130 und 120°C) verpresst. Dabei erhält der Folienmehrschichtverbund enthaltend die Gießfolie aus Compound 1 die Bezeichnung "System 1", aus Compound 2 die Bezeichnung "System 2" usw. Die weiteren Folienmehrschichtverbunde werden entsprechend bezeichnet.

### 4. Ausprüfung der Folienmehrschichtverbunde System 1 - 8 und einer kommerziell erhältlichen Folie:

Die Haftung zwischen den Schichten der Systeme 1 - 8 wurde beurteilt, in dem auf Delamination getestet wurde. Dabei wurde folgendermaßen vorgegangen:
**Auswertung und Punktevergabe:** Es wird versucht, die Folien wieder auseinander zu ziehen. Je schwerer dies geht, desto mehr Punkte werden zur Beurteilung (0 = sehr leicht, 6 =sehr schwer) vergeben. Ebenso wird visuell beurteilt, wie gut sich die Folien verbunden haben (0 = schlecht, 6 = sehr gut). Je besser, desto mehr Punkte werden vergeben. Als Vergleiche dienten die Folien ohne Additiv (Blindwert 1 und 2). Blindwert 1 wurde selber hergestellt, Blindwert 2 ist eine kommerziell erhältliche Folie der Bayer MaterialScience AG (Makrofol ID).

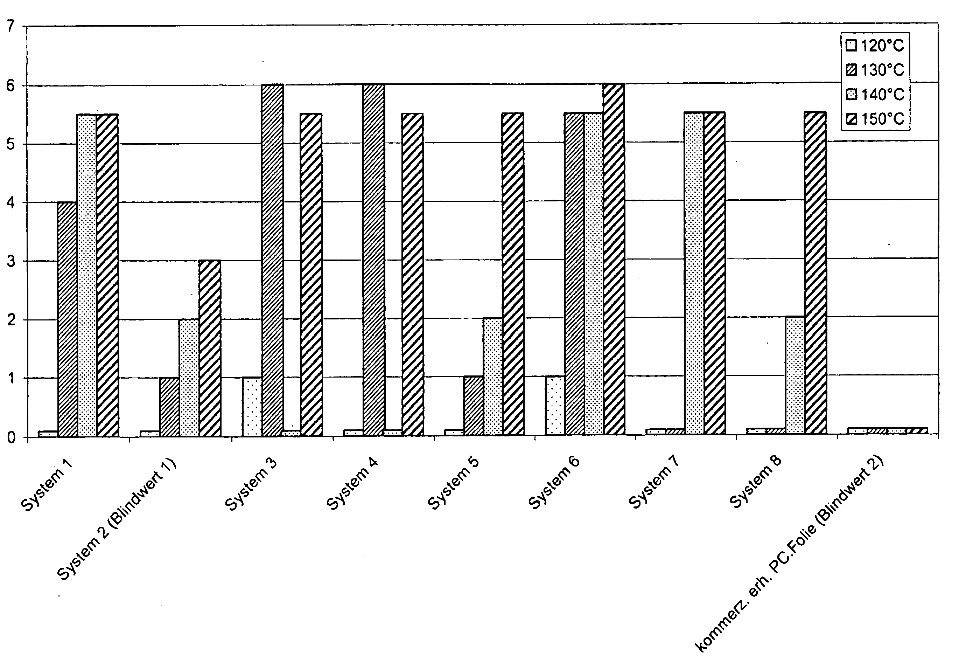

Die nach diesem beschrieben Punkte wurden addiert. Die graphische Darstellung des Ergebnisses gibt Fig. 1 wieder.

Die Versuche zeigen die erhöhte Haftung der erfindungsgemäßen Folien bei Laminierung im Vergleich zu den beiden Blindwerten 1 und 2. Insbesondere zeigen die Verbunde erhöhte Haftung bereits bei niedrigeren Laminierungstemperaturen.

## Patentansprüche

1. Smart-ID-Karte, Ausweis, tragbarer Datenträger, EC-Karte, Gesundheitskarte, Kreditkarte, Mobilfunkkarte enthaltend einen Folienmehrschichtverbund, der mindestens eine Schicht aus Polycarbonat oder Copolycarbonat aufweist, **dadurch gekennzeichnet, dass** das Polycarbonat oder Copolycarbonat zusätzlich ein oder mehrere Additive ausgewählt aus der Gruppe der Verbindungen der allgemeinen Formeln (1) bis (8) enthält: 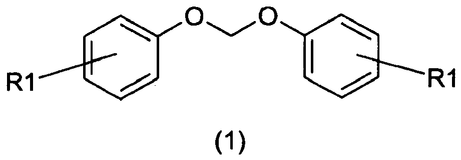 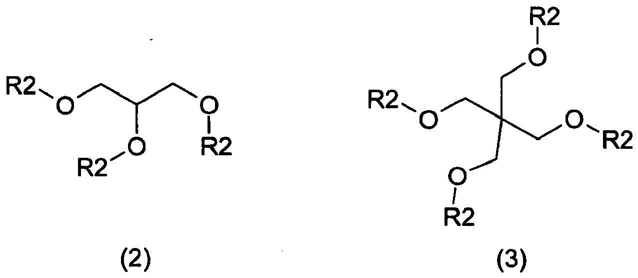 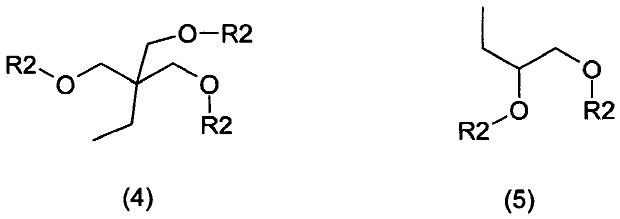 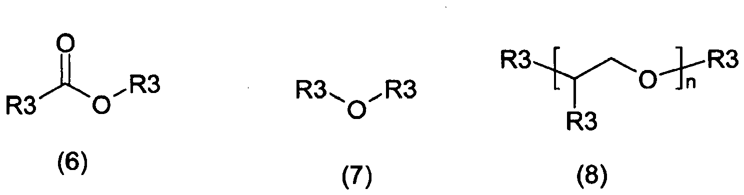 worin
R1 unabhängig voneinander ausgewählt sind aus der Gruppe bestehend aus C10-C25-Alkyl, C10-C25-Alkoxy, und C10-C25-Alkyl-substituiertes Aryl,
R2 unabhängig voneinander ausgewählt sind aus der Gruppe von C10-C25-Alkylcarbonyl oder Wasserstoff und
R3 unabhängig voneinander ausgewählt sind aus der Gruppe von C10-25-Alkyl,
wobei die Gesamtkonzentration der Additive ausgewählt aus der Gruppe der Verbindungen der allgemeinen Formeln (1) bis (8) 2,1 bis 6 %, bezogen auf die Masse der Zusammensetzung, beträgt.

2. Smart-ID-Karte, Ausweis, tragbarer Datenträger, EC-Karte, Gesundheitskarte, Kreditkarte, Mobilfunkkarte nach Anspruch 1, **dadurch gekennzeichnet, dass** das Additiv ausgewählt ist aus der Gruppe enthaltend Pentaerythrittetrastearat, Glycerinmonostearat, Stearylstearat und Gemische dieser Verbindungen.

3. Smart-ID-Karte, Ausweis, tragbarer Datenträger, EC-Karte, Gesundheitskarte, Kreditkarte, Mobilfunkkarte nach Anspruch 1 oder 2, **dadurch gekennzeichnet, dass** der Folienmehrschichtverbund eine Dicke von 0,1 bis 2 mm aufweist.

4. Smart-ID-Karte, Ausweis, tragbarer Datenträger, EC-Karte, Gesundheitskarte, Kreditkarte, Mobilfunkkarte nach Anspruch 1 bis 3, **dadurch gekennzeichnet, dass** die mindestens eine Schicht eine coextrudierte Folie ist.

5. Verwendung eines Folienmehrschichtverbunds der mindestens eine Schicht aus Polycarbonat oder Copolycarbonat aufweist, **dadurch gekennzeichnet, dass** das Polycarbonat oder Copolycarbonat zusätzlich ein oder mehrere Additive ausgewählt aus der Gruppe der Verbindungen der allgemeinen Formeln (1) bis (8) enthält: 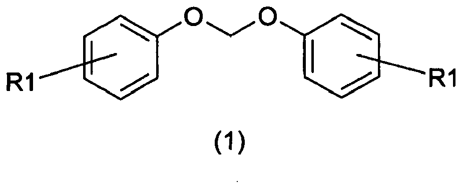 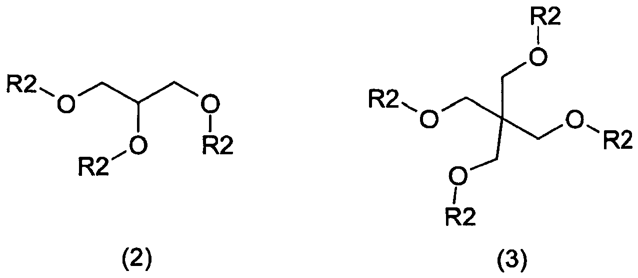 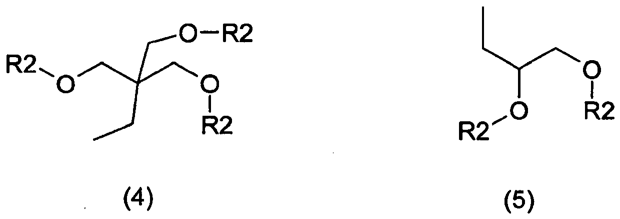 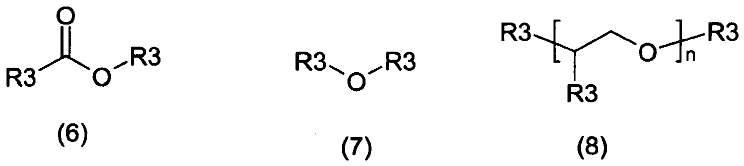 worin
R1 unabhängig voneinander ausgewählt sind aus der Gruppe bestehend aus C10-C25-Alkyl, C10-C25-Alkoxy, und C10-C25-Alkyl-substituiertes Aryl,
R2 unabhängig voneinander ausgewählt sind aus der Gruppe von C10-C25-Alkylcarbonyl oder Wasserstoff und
R3 unabhängig voneinander ausgewählt sind aus der Gruppe von C10-25-Alkyl,
und wobei die Gesamtkonzentration der Additive ausgewählt aus der Gruppe der Verbindungen der allgemeinen Formeln (1) bis (8) 2,1 bis 6 %, bezogen auf die Masse der Zusammensetzung beträgt, als Smart- ID-Karte, Ausweis, tragbarer Datenträger, EC-Karte, Gesundheitskarte, Kreditkarte oder Mobilfunkkarte.

## Claims

1. Smart ID card, identification document, portable data carrier, EC card, health card, credit card, mobile-telephone card comprising a multilayer foil composite which has at least one layer composed of polycarbonate or copolycarbonate, **characterized in that** the polycarbonate or copolycarbonate also comprises one or more additives selected from the group of the compounds of the general formulae (1) to (8): 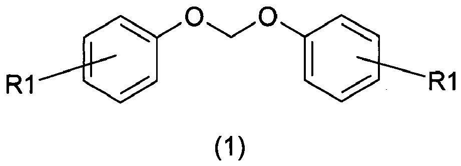 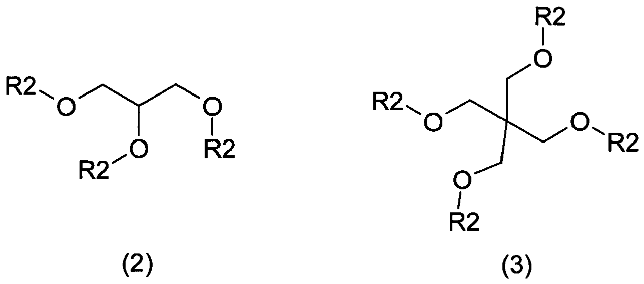 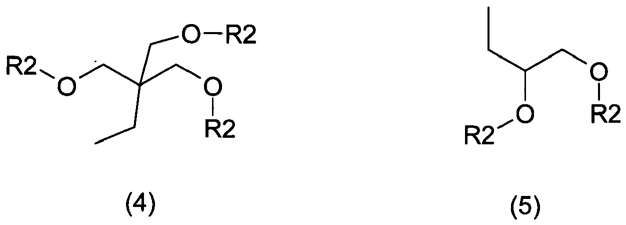 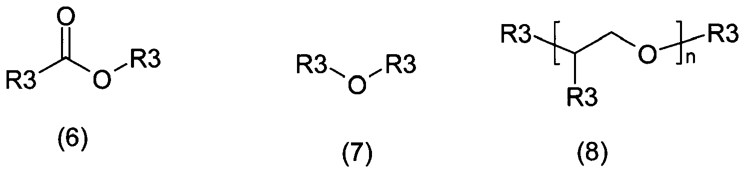 in which
R1 have been selected independently of one another from the group consisting of C10-C25-alkyl, C10-C25-alkoxy, and C10-C25-alkyl-substituted aryl,
R2 have been selected independently of one another from the group of C10-C25-alkylcarbonyl or hydrogen and
R3 have been selected independently of one another from the group of C10-25-alkyl, where
the total concentration of the additives selected from the group of the compounds of the general formulae (1) to (8) is from 2.1 to 6%, based on the weight of the composition.

2. Smart ID card, identification document, portable data carrier, EC card, health card, credit card, mobile-telephone card according to Claim 1, **characterized in that** the additive has been selected from the group consisting of pentaerythritol tetrastearate, glycerol monostearate, stearyl stearate and mixtures of the said compounds.

3. Smart ID card, identification document, portable data carrier, EC card, health card, credit card, mobile-telephone card according to Claim 1 or 2, **characterized in that** the thickness of the multilayer foil composite is from 0.1 to 2 mm.

4. Smart ID card, identification document, portable data carrier, EC card, health card, credit card, mobile-telephone card according to Claim 1 to 3, **characterized in that** the at least one layer is a coextruded foil.

5. Use of a multilayer foil composite which has at least one layer composed of polycarbonate or copolycarbonate, **characterized in that** the polycarbonate or copolycarbonate also comprises one or more additives selected from the group of the compounds of the general formulae (1) to (8): 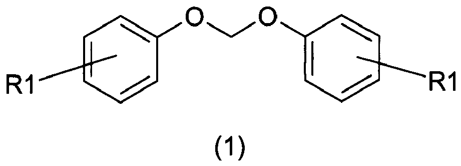 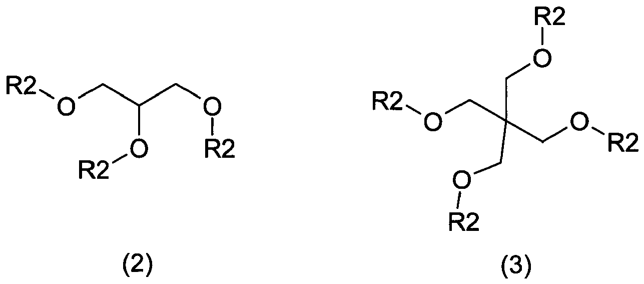 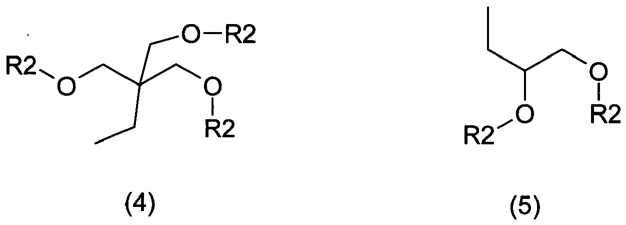 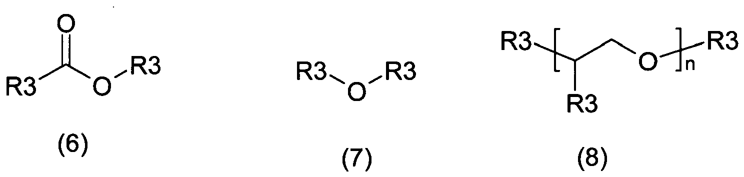 in which
R1 have been selected independently of one another from the group consisting of C10-C25-alkyl, C10-C25-alkoxy, and C10-C25-alkyl-substituted aryl,
R2 have been selected independently of one another from the group of C10-C25-alkylcarbonyl or hydrogen and
R3 have been selected independently of one another from the group of C10-25-alkyl, where
the total concentration of the additives selected from the group of the compounds of the general formulae (1) to (8) is from 2.1 to 6%, based on the weight of the composition as Smart ID card, identification document, portable data carrier, EC card, health card, credit card or mobile-telephone card.

## Revendications

1. Carte d'identité à puce, badge, support de données portable, carte de débit, carte de santé, carte de crédit, carte de téléphone mobile contenant un composite multicouche à feuilles, qui présente au moins une couche en polycarbonate ou en copolycarbonate, **caractérisés en ce que** le polycarbonate ou le copolycarbonate contient en outre un ou plusieurs additifs, choisis dans le groupe des composés des formules générales (1) à (8) : 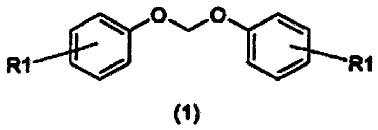 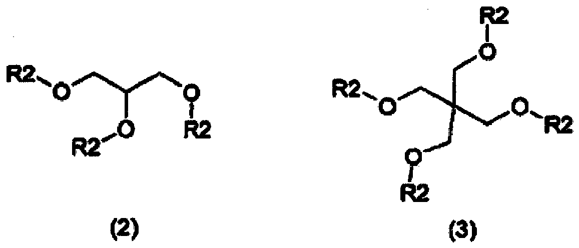 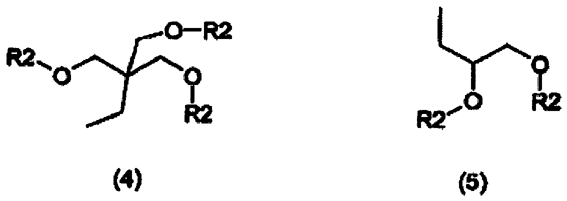 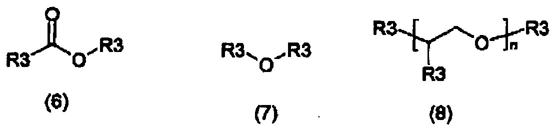 où les radicaux
R¹ sont choisis, indépendamment l'un de l'autre, dans le groupe constitué par C₁₀-C₂₅-alkyle, C₁₀-C₂₅-alcoxy et aryle substitué par C₁₀-C₂₅-alkyle,
R² sont choisis, indépendamment les uns des autres, dans le groupe formé par C₁₀-C₂₅-alkylcarbonyle ou hydrogène et
R³ sont choisis, indépendamment les uns des autres, dans le groupe formé par C₁₀-C₂₅-alkyle,
la concentration totale en additifs, choisis dans le groupe des composés des formules générales (1) à (8), étant de 2,1 à 6%, par rapport à la masse de la composition.

2. Carte d'identité à puce, badge, support de données portable, carte de débit, carte de santé, carte de crédit, carte de téléphone mobile selon la revendication 1, **caractérisés en ce que** l'additif est choisi dans le groupe contenant le tétrastéarate de pentaérythritol, le monostéarate de glycérol, le stéarate de stéaryle et les mélanges de ces composés.

3. Carte d'identité à puce, badge, support de données portable, carte de débit, carte de santé, carte de crédit, carte de téléphone mobile selon la revendication 1 ou 2, **caractérisés en ce que** le composite multicouche à feuilles présente une épaisseur de 0,1 à 2 mm.

4. Carte d'identité à puce, badge, support de données portable, carte de débit, carte de santé, carte de crédit, carte de téléphone mobile selon la revendication 1 à 3, **caractérisés en ce que** ladite au moins une couche est une feuille coextrudée.

5. Utilisation d'un composite multicouche à feuilles, qui présente au moins une couche en polycarbonate ou en copolycarbonate, **caractérisée en ce que** le polycarbonate ou le copolycarbonate contient en outre un ou plusieurs additifs, choisis dans le groupe des composés des formules générales (1) à (8) : 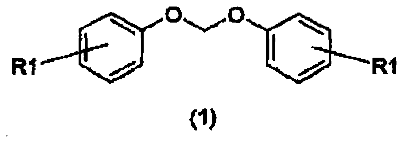 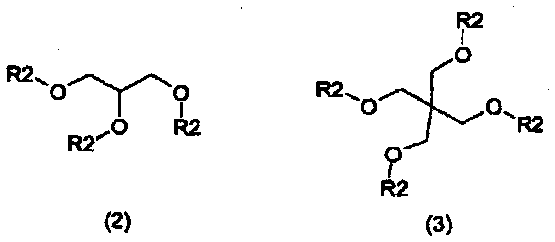 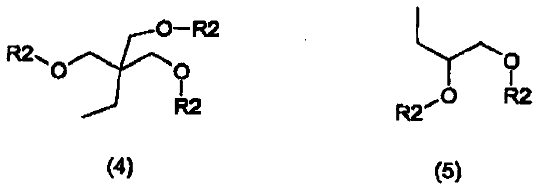 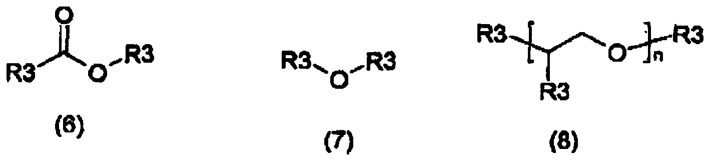 où les radicaux
R¹ sont choisis, indépendamment l'un de l'autre, dans le groupe constitué par C₁₀-C₂₅-alkyle, C₁₀-C₂₅-alcoxy, et aryle substitué par C₁₀-C₂₅-alkyle,
R² sont choisis, indépendamment les uns des autres, dans le groupe formé par C₁₀-C₂₅-alkylcarbonyle ou hydrogène et
R³ sont choisis, indépendamment les uns des autres, dans le groupe formé par C₁₀-C₂₅-alkyle,
et la concentration totale en additifs, choisis dans le groupe des composés des formules générales (1) à (8), étant de 2,1 à 6%, par rapport à la masse de la composition, comme carte d'identité à puce, badge, support de données portable, carte de débit, carte de santé, carte de crédit ou carte de téléphone mobile.
